# EUROPÄISCHE PATENTANMELDUNG

(11) **EP 4 425 733 A1**
(43) Veröffentlichungstag der Anmeldung: **04.09.2024**
(21) Anmeldenummer: 24154317.2
(22) Anmeldetag: 29.01.2024
(51) Int. Cl.: H02J 3/12, H02J 3/14, H02J 3/38

(54) **TECHNIK ZUM VERBINDEN EINER DEZENTRALEN STEUERUNG ÜBER EIN KOMMUNIKATIONSNETZ MIT EINER ZENTRALEN STEUERUNG**

(30) Priorität: 23.02.2023 DE 102023104443
(71) Anmelder: E.ON SE, 45131 Essen (DE)
(72) Erfinder: Berazaluce Minondo, Inigo, 45470 Mühlheim an der Ruhr (DE); Hernandez Salmeron, Luis Arturo, 40237 Düsseldorf (DE)
(74) Vertreter: Gunzelmann, Rainer

(57) **Zusammenfassung**

Es wird ein Technik zum Verbinden, insbesondere zum erstmaligen automatischen Verbinden, einer dezentralen Steuerung (25) über ein Kommunikationsnetz (51) mit einer zentralen Steuerung (45) beschrieben, wobei die dezentrale Steuerung (25) zum Steuern von elektrischen Energieerzeugern (10), elektrischen Energieverbrauchern (11) und/oder elektrischen Energiespeichern (12) in einem Hausnetz (24) eingerichtet ist, und das Hausnetz (24) über ein elektrisches Versorgungsnetz (30) mit einer Zentraleinheit (40) umfassend die zentrale Steuerung (45) verbunden ist, und wobei von der zentralen Steuerung (45) die folgenden Verfahrensschritte ausgeführt werden: Empfangen, von der dezentralen Steuerung (25) über das Kommunikationsnetz (51), von Konfigurationsinformation und Konfigurieren, basierend auf der empfangenen Konfigurationsinformation, einer Kommunikationsverbindung zwischen der dezentralen Steuerung (25) und der zentralen Steuerung (45) über das Kommunikationsnetz (51).

## Beschreibung

### TECHNISCHES GEBIET

Die vorliegende Offenbarung betrifft eine Technik zum Verbinden, insbesondere zum erstmaligen automatischen Verbinden, einer dezentralen Steuerung über ein Kommunikationsnetz mit einer zentralen Steuerung. Dazu umfasst die vorliegende Offenbarung Verfahren zum Verbinden einer dezentralen Steuerung über ein Kommunikationsnetz mit einer zentralen Steuerung, wobei die dezentrale Steuerung zum Steuern von elektrischen Energieerzeugern, elektrischen Energieverbrauchern und/oder elektrischen Energiespeichern in einem Hausnetz eingerichtet ist, und das Hausnetz über ein elektrisches Versorgungsnetz mit einer Zentraleinheit umfassend die zentrale Steuerung verbunden ist, und wobei die Verfahren von der zentralen Steuerung und/oder von der dezentralen Steuerung ausgeführt werden. Ferner werden eine zentrale Steuerung, eine dezentrale Steuerung und ein System umfassend eine zentrale Steuerung und eine dezentrale Steuerung offenbart.

### HINTERGRUND

Elektrische Versorgungsnetze verfügen über begrenzte freie Kapazitäten. Ein weiterer Kapazitätsbedarf in den elektrischen Versorgungsnetzen wird durch den Ausbau regenerativer Energiequellen (beispielsweise von Photovoltaikanlagen, Windkraftanlagen, etc.), der Elektrifizierung der Wärmeerzeugung (beispielsweise mit Hilfe von Wärmepumpen) und den Ausbau der E-Mobilität hervorgerufen. Um teure und mehrere Jahre in Anspruch nehmende Netzausbauten zu vermeiden, setzen Energienetzbetreiber immer häufiger intelligente Netzmanagementsysteme ein, welche an das elektrische Versorgungsnetz angeschlossene Lasten, Energieerzeuger und/oder Energiespeicher hinsichtlich der Energieaufnahme aus und der Energieabgabe in das elektrische Versorgungsnetz steuern.

In elektrischen Versorgungsnetzen muss sichergestellt werden, dass es zu keiner Überlastung kommt und die Netzstabilität gewährleistet wird. Um insbesondere Beschädigungen von Transformatoren durch thermische Überlastung zu vermeiden, führen die intelligente Netzmanagementsysteme Maßnahmen zum Vermeiden von Überlasten aus. Dazu umfassen die intelligenten Netzmanagementsysteme eine zentrale Steuerung, die an das elektrische Versorgungsnetz angeschlossene Lasten, Energieerzeuger und Energiespeicher direkt oder über eine lokale Steuerung steuern.

Soll eine neue, lokale Steuerung, beispielsweise in einem Neubau mit einer Photovoltaikanlage und einer Wärmepumpe, an das intelligente Netzmanagementsystem angeschlossen werden, so ist ein relativ hoher Installationsaufwand notwendig, da speziell geschulte Installateure vor Ort die lokale Steuerung mit dem intelligenten Netzmanagementsystem verbinden müssen, so dass die lokale Steuerung mit der zentralen Steuerung kommunizieren kann.

### KURZER ABRISS

Der vorliegenden Offenbarung liegt die Aufgabe zugrunde, eine Technik zum Verbinden, insbesondere zum erstmaligen automatischen Verbinden, einer dezentralen Steuerung über ein Kommunikationsnetz mit einer zentralen Steuerung bereitzustellen.

Zur Lösung dieser Aufgabe wird ein Verfahren zum Verbinden, insbesondere zum erstmaligen automatischen Verbinden, einer dezentralen Steuerung über ein Kommunikationsnetz mit einer zentralen Steuerung vorgeschlagen, wobei die dezentrale Steuerung zum Steuern von elektrischen Energieerzeugern, elektrischen Energieverbrauchern und/oder elektrischen Energiespeichern in einem Hausnetz eingerichtet ist, und das Hausnetz über ein elektrisches Versorgungsnetz mit einer Zentraleinheit umfassend die zentrale Steuerung verbunden ist, und wobei das Verfahren die folgenden von der zentralen Steuerung ausgeführten Verfahrensschritte umfasst: Empfangen, von der dezentralen Steuerung über das Kommunikationsnetz, von Konfigurationsinformation und Konfigurieren, basierend auf der empfangenen Konfigurationsinformation, einer Kommunikationsverbindung zwischen der dezentralen Steuerung und der zentralen Steuerung über das Kommunikationsnetz.

Bei dem elektrischen Versorgungsnetz kann es sich um ein Niederspannungsnetz handeln, insbesondere ein Niederspannungsnetz, welches von einem Mittelspannungsnetz gespeist wird. Das elektrische Versorgungsnetz kann als ein intelligentes Stromnetz, ein sogenanntes "Smart Grid", ausgebildet sein.

Bei dem Hausnetz kann es sich um ein elektrisches Netz in einem Haus, insbesondere in jeder Art von Gebäude, wie beispielsweise einem Ein- oder Mehrfamilienhaus, handeln, wobei das elektrische Hausnetz mit dem elektrischen Versorgungsnetz verbunden ist. Bei dem elektrischen Energieerzeuger kann es sich beispielsweise um eine Photovoltaikanlage handeln, die an das elektrische Hausnetz angeschlossen und dazu eingerichtet ist, elektrische Leistung in das elektrische Versorgungsnetz einzuspeisen. Die Photovoltaikanlage kann dabei einen Wechselrichter umfassen, der eine von einer Vielzahl von Solarmodulen erzeugte Gleichspannung in Wechselspannung wandelt und in das Netz einspeist. Bei dem elektrischen Energieverbraucher kann es sich beispielweise um eine Ladestation für ein Elektrofahrzeug handeln, wobei das Elektrofahrzeug als elektrischer Energiespeicher genutzt werden kann. An das Hausnetz können weitere elektrische Komponenten, wie beispielsweise eine Wärmepumpe, insbesondere Komponenten, die Energie in das elektrische Versorgungsnetz einspeisen und aus diesem beziehen, angeschlossen sein.

Die dezentralen Steuerung ist dazu eingerichtet, den elektrischen Energieerzeuger, den elektrischen Energieverbraucher und/oder den elektrischen Energiespeicher zu steuern, d.h., zu steuern, ob erzeugte elektrische Leistung in das Hausnetz und/oder das elektrische Versorgungsnetz einspeist wird und/oder ob von dem elektrischen Versorgungsnetz elektrische Leistung in das Hausnetz eingespeist wird bzw. welche an das Hausnetz angeschlossenen elektrischen Komponenten elektrische Energie konsumieren können. Bei der dezentralen Steuerung kann es sich um eine G100-kompatible Steuerung für ein Haus, insbesondere eine sogenannte "Smart Home Steuerung", handeln.

Bei der Zentraleinheit kann es sich um eine Transformatorstation oder eine Transformatorunterstation handeln, in der elektrische Energie von Verteilernetzen im Mittelspannungsbereich (z.B. 3 bis 30 kV in Deutschland) auf die in Haushalten übliche Niederspannung (z.B. 230 V bzw. 400 V in Deutschland) transformiert wird. Die Transformatorstation kann eine Primärtechnik mit einem Leistungstransformator, einer Mittelspannungsschaltanlage und einer Niederspannungsverteilung, eine Sekundärtechnik mit Automatisierungs- und Fernwirktechnik, Energiezähler und eine Kommunikationsvorrichtung umfassen.

Die zentrale Steuerung ist in der Zentraleinheit angeordnet und ist über das Kommunikationsnetz mit der dezentralen Steuerung verbunden. Über das Kommunikationsnetz sendet die zentrale Steuerung Steuerungsbefehle zum Steuern des elektrischen Energieerzeugers, des elektrischen Energieverbrauchers und/oder des elektrischen Energiespeichers an die dezentrale Steuerung. Beispielsweise sendet die zentrale Steuerung der dezentralen Steuerung einen Steuerungsbefehl, worauf die dezentrale Steuerung einen Energieerzeuger instruiert, nur bis zu einem vorgegebenen Schwellenwert elektrische Leistung in das elektrische Versorgungsnetz einzuspeisen, oder die dezentrale Steuerung den Energieerzeuger vom Hausnetz abkoppelt. Bei der zentralen Steuerung kann es sich um eine G100-kompatible Steuerung handeln.

Bei dem Kommunikationsnetz zwischen der zentralen Steuerung und der dezentralen Steuerung kann es sich um eine Powerline Communication-, PLC, Kommunikationsverbindung handeln. Vorzugsweise handelt es sich um eine Narrowband- (NB) PLC-Kommunikationsverbindung. So kann die Kommunikation zwischen der zentralen Steuerung und der dezentralen Steuerung über einen Verteilungsstrang des elektrischen Versorgungsnetzes erfolgen. Dazu können in der Zentraleinheit und dem Haus PLC-Modems und Koppelkapazitäten vorgesehen sein. Bei dem Kommunikationsnetz zwischen der zentralen Steuerung und der dezentralen Steuerung kann es sich auch um eine drahtlose Kommunikationsverbindung, wie beispielsweise eine Mobilfunk- oder WLAN-Verbindung, oder eine separate drahtgebundene Kommunikationsverbindung, wie beispielsweise eine Ethernet-Verbindung, handeln.

Bei dem erstmaligen Verbinden der dezentralen Steuerung über das Kommunikationsnetz mit der zentralen Steuerung kann es sich um ein tatsächlich erstmaliges Verbinden oder einer erneutes Verbinden nach einer Unterbrechung einer Kommunikationsverbindung zwischen der dezentralen Steuerung und der zentralen Steuerung, beispielsweise nach einem Einbau einer neuer elektrischen Komponente in das Hausnetz oder einem Neustart des Kommunikationsnetzes, handeln. Insbesondere kann das Verbinden automatisch, d.h., ohne menschliches Zutun nach dem Anschluss der dezentralen Steuerung an das Kommunikationsnetz, erfolgen.

Durch das Empfangen, von der dezentralen Steuerung über das Kommunikationsnetz, von Konfigurationsinformation und das Konfigurieren, basierend auf der empfangenen Konfigurationsinformation, der Kommunikationsverbindung zwischen der dezentralen Steuerung und der zentralen Steuerung über das Kommunikationsnetz wird ein "Plug & Play"-ähnlicher Prozess bereitgestellt, der ohne Zutun von speziell geschulten Installateuren eine Anbindung einer neuen dezentralen Steuerung mit angeschlossenen elektrischen Komponenten an die zentrale Steuerung ermöglicht. Entsprechende Verfahren können für eine Vielzahl von neuen dezentralen Steuerungen eingesetzt werden, so dass beispielsweise Häuser eines neuen Stadtviertels auf einfache Weise mit einer zentralen Steuerung verbunden werden können.

Um eine zuverlässige, automatische Anbindung der dezentralen Steuerung an die zentrale Steuerung zu ermöglichen kann das Verfahren ferner, vor dem Empfangen der Konfigurationsinformation, die folgenden Verfahrensschritte umfassen: Erfassen eines Anschlusses der dezentralen Steuerung an das Kommunikationsnetz und Anfordern, von der dezentralen Steuerung, der Konfigurationsinformation.

Um auch dezentrale Steuerungen unterschiedlicher Hersteller auf zuverlässige Weise mit der zentralen Steuerung verbinden zu können kann die Konfigurationsinformation Information betreffend einen Hersteller, ein Modell und/oder benötigte Treiber der dezentralen Steuerung und/oder eines Gateways der dezentralen Steuerung umfassen. Bei dem Gateway kann es sich um eine Kommunikationsschnittstelle handeln, die eine Kommunikation über das Kommunikationsnetz mit der zentralen Steuerung ermöglicht. In der zentralen Steuerung kann ein entsprechendes Gateway vorgesehen sein. Falls notwendig, kann die zentrale Steuerung für die dezentrale Steuerung benötigte Treiber von einem Server herunterladen. Basierend auf dem Hersteller und/oder dem Modell der dezentralen Steuerung kann die zentrale Steuerung, beispielsweise ein Betriebssystem der zentralen Steuerung, eine Kommunikationsverbindung mit der dezentralen Steuerung aufbauen.

Insbesondere kann die zentrale Steuerung feststellen, ob eine dezentrale Steuerung mit der zentralen Steuerung kompatibel ist. Ist die dezentrale Steuerung mit der zentralen Steuerung kompatibel, so kann die zentrale Steuerung über das Kommunikationsnetz eine Kommunikationsverbindung mit der dezentralen Steuerung aufbauen. Ist die dezentrale Steuerung mit der zentralen Steuerung jedoch nicht kompatibel, so kann die zentrale Steuerung eine Fehlermeldung ausgeben, beispielsweise eine E-Mail an den Netzbetreiber schicken.

Werden neue elektrische Energieerzeuger, elektrischen Energieverbraucher und/oder elektrische Energiespeicher über das Hausnetz an das elektrische Versorgungsnetz angeschlossen, so kann dies negative Auswirkungen auf die Netzstabilität des elektrischen Versorgungsnetzes haben. Beispielsweise muss sichergestellt werden, dass keine Überlastsituation in dem elektrischen Versorgungsnetz auftritt, oder dass sich die Spannung in dem elektrischen Versorgungsnetz auf einen unzulässigen Wert erhöht. Um solche Probleme zu vermeiden kann das Verfahren ferner, nach der Konfiguration der Kommunikationsverbindung zwischen der dezentralen Steuerung und der zentralen Steuerung, den Schritt Empfangen, von der dezentralen Steuerung, von Information betreffend den elektrischen Energieerzeuger, den elektrischen Energieverbraucher und/oder den elektrischen Energiespeicher umfassen.

Insbesondere kann die Information betreffend den elektrischen Energieerzeuger, den elektrischen Energieverbraucher und/oder den elektrischen Energiespeicher elektrische Leistungen, insbesondere maximale elektrische Leistungen, die der elektrische Energieerzeuger, der elektrische Energieverbraucher und/oder der elektrische Energiespeicher in das elektrische Versorgungsnetz einspeist bzw. von dem elektrischen Versorgungsnetz bezieht, umfassen.

Die Information betreffend den elektrischen Energieerzeuger, den elektrischen Energieverbraucher und/oder den elektrischen Energiespeicher kann auch Information betreffend einen Hersteller, ein Modell und/oder einen Installateur des elektrischen Energieerzeugers, des elektrischen Energieverbrauchers und/oder des elektrischen Energiespeichers umfassen.

Um Netzinstabilitäten in dem elektrischen Versorgungsnetz, die durch neu angeschlossene elektrische Energieerzeuger, elektrische Energieverbraucher und/oder elektrische Energiespeicher verursacht werden, zu vermeiden, kann das Verfahren ferner den Verfahrensschritt Steuern, basierend auf der Information betreffend den elektrischen Energieerzeuger, den elektrischen Energieverbraucher und/oder den elektrischen Energiespeicher, des elektrischen Energieerzeugers, des elektrischen Energieverbrauchers und/oder des elektrischen Energiespeichers umfassen.

Die eingangs gestellte Aufgabe wird des Weiteren durch eine zentrale Steuerung gelöst, die dazu eingerichtet ist, eines der vorstehend beschriebenen Verfahren auszuführen.

Die vorliegende Offenbarung betrifft ferner eine Verfahren zum Verbinden, insbesondere zum erstmaligen automatischen Verbinden, einer dezentralen Steuerung über ein Kommunikationsnetz mit einer zentralen Steuerung, wobei die dezentrale Steuerung zum Steuern von elektrischen Energieerzeugern, elektrischen Energieverbrauchern und/oder elektrischen Energiespeichern in einem Hausnetz eingerichtet ist, und das Hausnetz über ein elektrisches Versorgungsnetz mit einer Zentraleinheit umfassend die zentrale Steuerung verbunden ist, und wobei das Verfahren den folgenden von der dezentralen Steuerung ausgeführten Verfahrensschritt umfasst: Senden, nach einem erstmaligen Anschluss der dezentralen Steuerung an das Kommunikationsnetz, von Konfigurationsinformation über das Kommunikationsnetz an die zentrale Steuerung.

Bei dem erstmaligen Anschluss der dezentralen Steuerung an das Kommunikationsnetz kann es sich um einen tatsächlich erstmaligen Anschluss oder einen erneuten Anschluss nach einer Unterbrechung einer Kommunikationsverbindung zwischen der dezentralen Steuerung und der zentralen Steuerung, beispielsweise nach einem Einbau einer neuer elektrischen Komponente in das Hausnetz oder einem Neustart des Kommunikationsnetzes, handeln.

Zum automatischen Einrichten einer Kommunikationsverbindung kann das Verfahren vor dem Senden der Konfigurationsinformation ferner den Schritt Empfangen, von der zentralen Steuerung, einer Anforderung der Konfigurationsinformation umfassen.

Die angeforderte Konfigurationsinformation kann Information betreffend einen Hersteller, ein Modell und/oder benötigte Treiber der dezentralen Steuerung und/oder eines Gateways der dezentralen Steuerung umfassen.

Zum Vermeiden von Netzinstabilitäten in dem elektrischen Versorgungsnetz kann das Verfahren ferner, nach einer Konfiguration der Kommunikationsverbindung zwischen der dezentralen Steuerung und der zentralen Steuerung, den Schritt Senden, an die zentrale Steuerung, von Information betreffend den elektrischen Energieerzeuger, den elektrischen Energieverbraucher und/oder den elektrischen Energiespeicher umfassen.

Gemäß einer Weiterbildung kann das Verfahren die folgenden Schritte umfassen: Empfangen, von der zentrale Steuerung, von Steuerungsbefehlen für den elektrischen Energieerzeuger, den elektrischen Energieverbraucher und/oder den elektrischen Energiespeicher, und Steuern, basierend auf den empfangenen Steuerungsbefehlen, des elektrischen Energieerzeugers, des elektrischen Energieverbrauchers und/oder des elektrischen Energiespeichers.

Die eingangs gestellte Aufgabe wird ferner durch eine dezentrale Steuerung gelöst, die dazu eingerichtet ist, eines der vorstehend beschriebenen Verfahren für eine dezentrale Steuerung auszuführen.

Schließlich umfasst die vorliegende Offenbarung ein Steuerungssystem mit einer zentralen Steuerung und einer dezentralen Steuerung, die über ein Kommunikationsnetz verbunden sind.

Für die Kommunikation zwischen dezentraler Steuerung und zentraler Steuerung über das Kommunikationsnetz können eine Vielzahl von Sicherheitsmaßnahmen verwendet werden. Die Sicherheitsmaßnahmen können Folgendes umfassen:
- Daten-Verschlüsselung/Entschlüsselung der zwischen dezentraler Steuerung und zentraler Steuerung übertragenen Daten, zum Beispiel über einen Hashbased Message Authentication Code, HASH/HMAC mit lokalem Schlüssel und einem Schlüsseländerungsalgorithmus, oder Daten-Verschlüsselung über SHA256;
- Tokenisierung der zwischen dezentraler Steuerung und zentraler Steuerung übertragenen Daten, zum Beispiel Hinzufügung einer Genehmigungsinstanz einer unabhängigen dritten Partei (wie z. B. beim Senden von finanziellen Transaktionen);
- Bestätigung der zwischen dezentraler Steuerung und zentraler Steuerung übertragenen Daten mit gehashten MAC-Adressen bzw. Seriennummern (vorregistriert vor der Inbetriebnahme der dezentralen Steuerung); und/oder
- Verwendung eines lokalen Codes von einem QR-Code zur Aktivierung der dezentralen Steuerung über eine WebApp mit Login, zum Beispiel basierend auf einer vorregistrierten Seriennummer.

Somit wird eine zuverlässige erstmalige Verbindung einer dezentralen Steuerung mit einer zentralen Steuerung über ein Kommunikationsnetz ermöglicht. Dabei kann die Verbindung automatisch hergestellt werden, egal um welche dezentrale Steuerung (Modell, Hersteller) es sich handelt und welche elektrischen Komponenten von der dezentralen Steuerung gesteuert werden. Auch ist es auf einfache Weise möglich, insbesondere ohne Vorhandensein einer Standardisierung möglich, die Anzahl der angeschlossenen dezentralen Steuerung hoch zu skalieren. Folglich können Einschränkungen bei der Inbetriebnahme von dezentralen Steuerungen vermieden werden, insbesondere da Kompatibilitätsprobleme so gering wie möglich gehalten werden. So können kompatible dezentrale Einheiten automatisch erkannt werden. Schließlich kann eine dynamische Aktualisierung einer Einschätzung der verfügbaren Flexibilität der steuerbaren elektrischen Komponenten erfolgen.

Die oben beschriebenen Aspekte und Varianten können kombiniert werden, ohne dass dies explizit beschrieben ist. Jede der beschriebenen Ausgestaltungsvarianten ist somit optional zu jeder Ausgestaltungsvariante oder Kombinationen davon zu sehen. Die vorliegende Offenbarung ist somit nicht auf die einzelnen Ausgestaltungen und Varianten in der beschriebenen Reihenfolge oder einer bestimmten Kombination der Aspekte und Ausgestaltungsvarianten beschränkt.

### KURZE BESCHREIBUNG DER ZEICHNUNGEN

Weitere Vorteile, Einzelheiten und Merkmale der hier beschriebenen Verfahren Vorrichtungen, Systeme und Netze ergeben sich aus der nachfolgenden Beschreibung von Ausführungsbeispielen und der Figuren.
- Fig. 1: zeigt eine schematische Darstellung eines Ausführungsbeispiels eines elektrischen Versorgungsnetzes mit einer Zentraleinheit und einer Vielzahl von Häusern;
- Fig. 2: zeigt ein Flussdiagramm eines Ausführungsbeispiels eines Verfahrens zum Verbinden, insbesondere zum erstmaligen automatischen Verbinden, einer dezentralen Steuerung über ein Kommunikationsnetz mit einer zentralen Steuerung, welches von der zentralen Steuerung ausgeführt wird; und
- Fig. 3: zeigt ein Flussdiagramm eines Ausführungsbeispiels eines Verfahrens zum Verbinden, insbesondere zum erstmaligen automatischen Verbinden, einer dezentralen Steuerung über ein Kommunikationsnetz mit einer zentralen Steuerung, welches von der dezentralen Steuerung ausgeführt wird.

### DETAILLIERTE BESCHREIBUNG

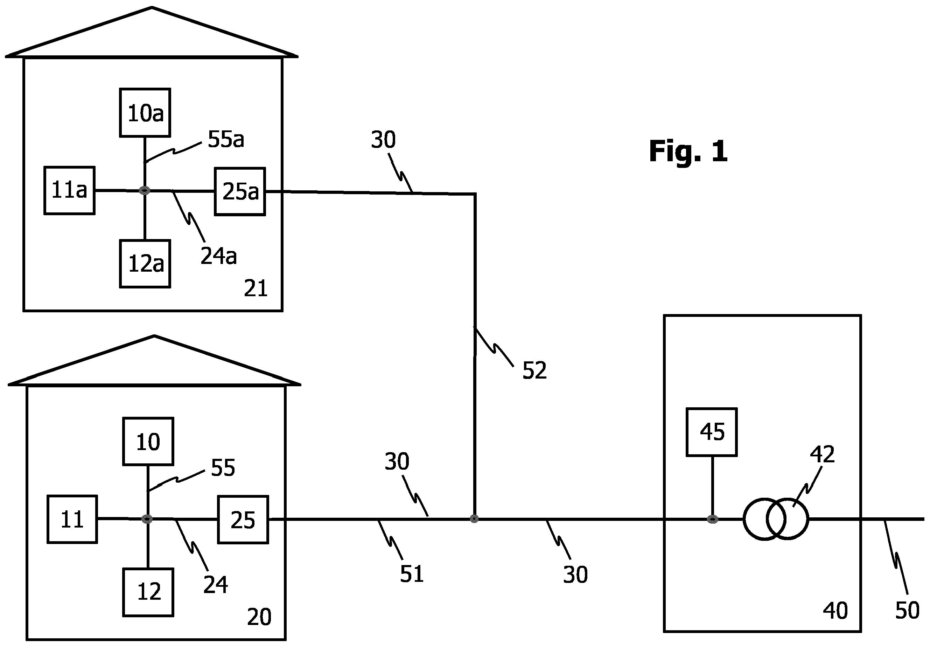

Die Fig. 1 zeigt eine schematische Darstellung eines Ausführungsbeispiels eines elektrischen Versorgungsnetzes 30 mit einer Zentraleinheit 40 und einer Vielzahl von Häusern, von denen zwei Häuser 20 und 21 exemplarisch gezeigt sind.

Bei dem elektrische Versorgungsnetz 30 handelt es sich um ein Niederspannungsnetz, das von einem Mittelspannetz 50 gespeist wird. Zur Transformation zwischen den Netzen 50 und 30 ist in der Zentraleinheit ein Transformator 42 vorgesehen. Durch den Transformator 42 wird die Mittelspannung des Mittelspannungsnetzes 50 in eine Niederspannung transformiert, die von einem Verteiler in eine Vielzahl von Verteilungssträngen des elektrischen Versorgungsnetzes 30 verteilt wird (in Fig. 1 nicht gezeigt). Beispielsweise können an den Verteiler über 100 Verteilungsstränge angeschlossen sein.

Die Zentraleinheit 40 umfasst eine zentrale Steuerung 45. Mit Hilfe der zentralen Steuerung 45 kann die Zentraleinheit 40 elektrische Lasten und Energieerzeuger in den Häusern 20 und 21 ab- bzw. anschalten. Bei der zentralen Steuerung 45 kann es sich um eine G100-kompatible Unterstationssteuerung handeln, siehe Energy Networks Association, Engineering Recommendation G100, Issue 1 Amendment 2 2018, Technical Requirements for Customer Export Limiting Schemes. Weitere, in der Fig. 1 nicht gezeigte Elemente, wie beispielsweise eine Leistungsmessvorrichtung, eine Kommunikationsvorrichtung, usw., können in der Zentraleinheit 40 vorgesehen sein.

Das Haus 20 umfasst eine dezentrale Steuerung 25 (Haussteuerung) und ein Hausnetz 24, an das eine Photovoltaikanlage 10, eine Ladestation für ein Elektrofahrzeug 11 und ein elektrischer Energiespeicher 12 angeschlossen sind. Weitere, in der Figur 1 nicht gezeigte, elektrische Lasten (z.B. eine Wärmepumpe) und elektrische Energieerzeuger, sowie ein Strommessgerät (z.B. ein Smart Meter) können in dem Haus 20 an das Hausnetz 24 angeschlossen sein. Entsprechend umfasst das Haus 21 eine dezentrale Steuerung 25a und ein Hausnetz 24a, an das eine Photovoltaikanlage 10a, eine Ladestation für ein Elektrofahrzeug 11a und ein elektrischer Energiespeicher 12a angeschlossen sind.

Über das elektrische Versorgungsnetz 30 ist die zentrale Steuerung 45 mit den dezentralen Steuerungen 25 und 25a bzw. den Hausnetzen 24 und 24a der Häuser 20 und 21 verbunden. So können die dezentrale Steuerung 25 und 25a gerätespezifische Leistungsbefehle und/oder die Leistungsabgabe des gesamten Hauses 20 bzw. 21 betreffende Befehle von der zentralen Steuerung 45 empfangen. Des Weiteren besteht eine PLC-Kommunikationsverbindung 51 zwischen der zentralen Steuerung 45 und der dezentralen Steuerung 25 in dem Haus 20 und eine PLC-Kommunikationsverbindung 52 zwischen der zentralen Steuerung 45 und der dezentralen Steuerung 25a in dem Haus 21. Ferner sind jeweilige PLC-Kommunikationsverbindungen 55 und 55a zwischen der dezentralen Steuerung 25 bzw. 25a und der Photovoltaikanlage 10 bzw. 10a in jedem der Häuser 20 und 21 vorgesehen. Für die Kommunikationsverbindungen 51, 52 und 55 notwendige PLC-Modems und Koppelkapazitäten sind ferner in der Zentraleinheit 40 und den Häusern 20 und 21 vorgesehen (in Fig. 1 nicht gezeigt).

Es ist auch denkbar, dass die Kommunikationsverbindungen 51 und 52 als separate Kommunikationsnetze, beispielsweise also Mobilfunknetze, ausgebildet sind, so dass die zentrale Steuerung 45 nur über ein Kommunikationsnetz 51 mit der dezentralen Steuerung 25 verbunden ist. Entsprechend kann die zentrale Steuerung 45 nur über ein Kommunikationsnetz 52 mit der dezentralen Steuerung 25a verbunden sein. So kann das elektrische Versorgungsnetz 30 unabhängig von den dezentralen Steuerungen 25 und 25a und unabhängig von der zentralen Steuerung 45 mit den Hausnetzen 24 und 24a verbunden sein.

Zur Vermeidung von Über- bzw. Unterlastsituationen in dem elektrischen Versorgungsnetz 30 steuert die zentrale Steuerung 45 in jedem der Häuser 20 und 21 die Photovoltaikanlage 10 und 10a, die Ladestation für das Elektrofahrzeug 11 und 11a und den elektrischen Energiespeicher 12 und 12a. Dazu sendet die zentrale Steuerung 45 über die Kommunikationsverbindung 51 Steuerungsbefehle an die dezentrale Steuerung 25 in dem Haus 20 und über die Kommunikationsverbindung 52 Steuerungsbefehle an die dezentrale Steuerung 25a in dem Haus 21. In Abhängigkeit von den empfangenen Steuerungsbefehlen steuert die dezentrale Steuerung 25 in dem Haus 20 die Photovoltaikanlage 10, die Ladestation für das Elektrofahrzeug 11 und den elektrischen Energiespeicher 12. In Abhängigkeit von den empfangenen Steuerungsbefehlen steuert auch die dezentrale Steuerung 25a in dem Haus 21 die Photovoltaikanlage 10a, die Ladestation für das Elektrofahrzeug 11a und den elektrischen Energiespeicher 12a.

Zum Schutz vor Kommunikationsfehlern bei der Kommunikation über die Kommunikationsnetze 51 und 52 können in dem elektrischen Versorgungsnetz 30 bzw. den Kommunikationsnetzen 51 und 52 Signalwiederholer (in Fig. 1 nicht gezeigt) vorgesehen sein, die wiederholt Steuerungssignale von der zentralen Steuerung 45 an die jeweiligen dezentralen Steuerungen 25 bzw. 25 der Häuser 20 und 21 senden. Es kann auch eine kontinuierliche Signalisierung vorgesehen sein, bei der beispielsweise jede Sekunde ein neuer Befehl von der zentralen Steuerung 45 an die dezentralen Steuerungen 25 bzw. 25a gesendet wird. Wenn der vorherige Befehl nicht empfangen wurde, erzeugt die zentralen Steuerung 45 einen neuen Befehl. Wenn eine vorgegebene Zeit keine Rückmeldung von der dezentralen Steuerungen 25 bzw. 25a empfangen wurde, kann die zentrale Steuerung 45 eine interne Liste zur Steuerung verfügbarer Häuser 20 bzw. 21 aktualisieren.

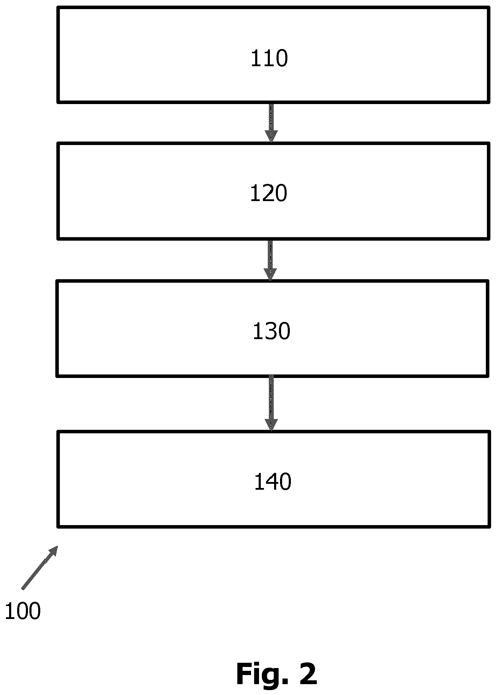

Die Fig. 2 zeigt ein Flussdiagramm eines Ausführungsbeispiels eines Verfahrens 100 zum Verbinden, insbesondere zum erstmaligen automatischen Verbinden, einer dezentralen Steuerung über ein Kommunikationsnetz mit einer zentralen Steuerung, welches von der zentralen Steuerung ausgeführt wird

Das Verfahren kann von der in der Fig. 1 gezeigten zentralen Steuerung 45 ausgeführt werden und wird nachfolgend unter Bezugnahme auf die Fig. 1 beschrieben. Es wird aber darauf hingewiesen, dass das Verfahren der Fig. 2 nicht auf das Ausführungsbeispiel der Fig. 1 beschränkt ist.

In einem ersten Schritt 110 empfängt die zentrale Steuerung 45 von der dezentralen Steuerung 25 über das Kommunikationsnetz 51 Konfigurationsinformation. In einem zweiten Schritt 120 konfiguriert die zentrale Steuerung 45, basierend auf der empfangenen Konfigurationsinformation, einer Kommunikationsverbindung zwischen der dezentralen Steuerung 25 und der zentralen Steuerung 45 über das Kommunikationsnetz 51. Bei der Konfigurationsinformation kann es sich um Information eines Herstellers, eines Modells und/oder benötigter Treiber der dezentralen Steuerung 25 und/oder eines Gateways der dezentralen Steuerung 25 handeln. Beispielsweise empfängt die zentrale Steuerung 45 von der dezentralen Steuerung 25 die Information, dass es sich bei dem Modell der Steuerung um ein Modell XYZ vom Hersteller ABC handelt. Basierend auf diese Informationen kann die zentrale Steuerung 45 aus einer Datenbank die Konfigurationsdaten für eine Kommunikation mit der dezentralen Steuerung 25 abrufen. Entsprechend kann die zentrale Steuerung 45 eine Kommunikationsverbindung zwischen der zentralen Steuerung 45 und dezentralen Steuerung 25 initiieren.

Vor dem Empfangen 110 der Konfigurationsinformation kann das Verfahren ferner die Schritte Erfassen eines Anschlusses der dezentralen Steuerung 25 an das Kommunikationsnetz 51 und Anfordern, von der dezentralen Steuerung 25, der Konfigurationsinformation, umfassen.

Nach dem Konfigurieren 120 der Kommunikationsverbindung zwischen der dezentralen Steuerung 25 und der zentralen Steuerung 45 empfängt die zentrale Steuerung 45 in einem Schritt 130 von der dezentralen Steuerung 25 Information betreffend den elektrischen Energieerzeuger 10, den elektrischen Energieverbraucher 11 und/oder den elektrischen Energiespeicher 12. Die Information betreffend den elektrischen Energieerzeuger 10, den elektrischen Energieverbraucher 11 und/oder den elektrischen Energiespeicher 12 umfasst maximale elektrische Leistungen, die der elektrische Energieerzeuger 10, der elektrische Energieverbraucher 11 und/oder der elektrische Energiespeicher 12 in das elektrische Versorgungsnetz 30 einspeist bzw. von dem elektrischen Versorgungsnetz 30 bezieht. Beispielsweise sendet die zentrale Steuerung 25 die Information an die zentrale Steuerung 45, dass eine Photovoltaikanlage 10 maximal 25 Kilowatt in das elektrische Versorgungsnetz 30 einspeisen kann. Dabei kann die maximale Einspeisungsleistung der Photovoltaikanlage 10 durch einen Wechselrichter der Photovoltaikanlage 10 vorgegeben sein.

Die Information betreffend den elektrischen Energieerzeuger 10, den elektrischen Energieverbraucher 11 und/oder den elektrischen Energiespeicher 12 kann auch einen Hersteller, ein Modell und/oder einen Installateur des elektrischen Energieerzeugers 10, des elektrischen Energieverbrauchers 11 und/oder des elektrischen Energiespeichers 12 umfassen. Beispielsweise teilt die dezentrale Steuerung 25 der zentralen Steuerung 45 über das Kommunikationsnetz 51 mit, dass eine Photovoltaikanlage 10 vom Hersteller ZYX an das Hausnetz 24 angeschlossen ist. Die zentrale Steuerung 45 kann dann aus einer Datenbank eine Information abrufen, welche maximale Einspeisungsleistung die Photovoltaikanlage 10 vom Hersteller ZYX erzeugt.

In einem nachfolgenden Schritt 140 steuert die zentrale Steuerung 45 basierend auf der Information betreffend den elektrischen Energieerzeuger 10, den elektrischen Energieverbraucher 11 und/oder den elektrischen Energiespeicher 12 den elektrischen Energieerzeuger 10, den elektrischen Energieverbraucher 11 und/oder den elektrischen Energiespeicher 12. Beispielsweise erfolgt eine Steuerung hinsichtlich dynamischer Leistungswerte oder einer Sollspannung. Insbesondere kann die Steuerung 45 neue Steuerungssollwerte für die dezentrale Steuerung 25 vorgeben bzw. an die dezentrale Steuerung senden.

Das Verfahren der Fig. 2 wurde in Bezug auf die zentrale Steuerung 45 und die dezentrale Steuerung 25 in dem Haus 20 beschrieben. Ebenso kann das Verfahren jedoch auch auf die dezentrale Steuerung 25a angewendet werden.

Somit kann eine zuverlässige erstmalige Verbindung der dezentralen Steuerung 25 bzw. 25a mit der zentralen Steuerung 45 über das Kommunikationsnetz 51 bzw. 52 realisiert werden.

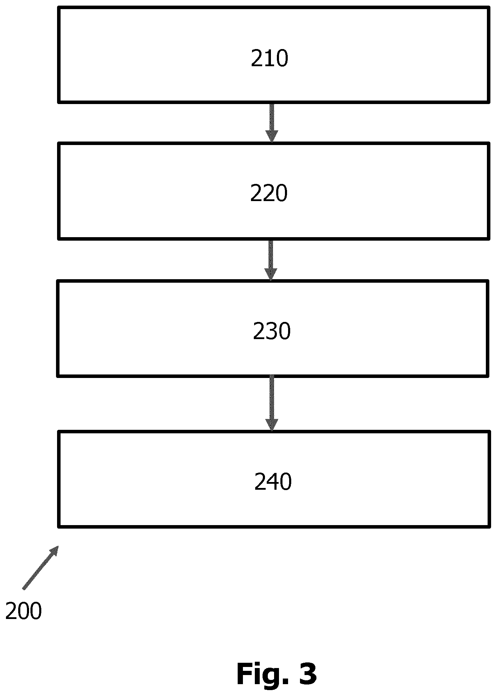

Die Fig. 3 zeigt ein Flussdiagramm eines Ausführungsbeispiels eines Verfahrens 200 zum Verbinden, insbesondere zum erstmaligen automatischen Verbinden, einer dezentralen Steuerung über ein Kommunikationsnetz mit einer zentralen Steuerung, welches von der dezentralen Steuerung ausgeführt wird.

Das Verfahren kann von der in der Fig. 1 gezeigten dezentralen Steuerung 25 oder 25a ausgeführt werden und wird nachfolgend unter Bezugnahme auf die Fig. 1 und die dezentrale Steuerung 25 beschrieben. Es wird aber darauf hingewiesen, dass das Verfahren der Fig. 3 nicht auf das Ausführungsbeispiel der Fig. 1 beschränkt ist. Die Verfahren der Figs. 2 und 3 können auch zu einem wechselseitigen Verfahren kombiniert werden.

In einem ersten Schritt 210 sendet die dezentrale Steuerung 25, nach einem erstmaligen Anschluss der dezentralen Steuerung 25 an das Kommunikationsnetz 51, Konfigurationsinformation über das Kommunikationsnetz 51 an die zentrale Steuerung 45. Die Konfigurationsinformation kann Information über einen Hersteller, ein Modell und/oder benötigte Treiber der dezentralen Steuerung 25 und/oder eines Gateways der dezentralen Steuerung 25 umfassen.

Optional kann das Verfahren ferner, vor dem Senden der Konfigurationsinformation, den Schritt Empfangen, von der zentralen Steuerung 45, einer Anforderung der Konfigurationsinformation umfassen

Nach einer Konfiguration der Kommunikationsverbindung zwischen der dezentralen Steuerung 25 und der zentralen Steuerung 45, die von der zentralen Steuerung 45 initiiert wurde, umfasst das Verfahren den weiteren Schritt Senden 220, an die zentrale Steuerung 45, von Information betreffend den elektrischen Energieerzeuger 10, den elektrischen Energieverbraucher 11 und/oder den elektrischen Energiespeicher 12. Beispielsweise teilt die dezentrale Steuerung 25 der zentralen Steuerung 45 über das Kommunikationsnetz 51 mit, das eine Wärmepumpe vom Hersteller CBA an das Hausnetz 24 angeschlossen ist. Die zentrale Steuerung 45 kann dann in einer Datenbank nachschauen, welche maximale elektrische Leistung die Wärmepumpe vom Hersteller CBA aus dem elektrischen Versorgungsnetz 30 beziehen will.

Anschließend umfasst das Verfahren die Schritte Empfangen 230, von der zentralen Steuerung 45, von Steuerungsbefehlen für den elektrischen Energieerzeuger 10, den elektrischen Energieverbraucher 11 und/oder den elektrischen Energiespeicher 12, und Steuern 240, basierend auf den Steuerungsbefehlen, des elektrischen Energieerzeugers 10, des elektrischen Energieverbrauchers 11 und/oder des elektrischen Energiespeichers 12.

Somit wird eine zuverlässige erstmalige Verbindung der dezentralen Steuerung 25 bzw. 25a mit der zentralen Steuerung 45 über das Kommunikationsnetz 51 bzw. 52 ermöglicht.

In den vorgestellten Beispielen sind unterschiedliche Merkmale und Funktionen der vorliegenden Offenbarung getrennt voneinander sowie in bestimmten Kombinationen beschrieben worden. Es versteht sich jedoch, dass viele dieser Merkmale und Funktionen, wo dies nicht explizit ausgeschlossen ist, miteinander frei kombinierbar sind.

## Patentansprüche

1. Verfahren (100) zum Verbinden, insbesondere zum erstmaligen automatischen Verbinden, einer dezentralen Steuerung (25) über ein Kommunikationsnetz (51) mit einer zentralen Steuerung (45), wobei die dezentrale Steuerung (25) zum Steuern von elektrischen Energieerzeugern (10), elektrischen Energieverbrauchern (11) und/oder elektrischen Energiespeichern (12) in einem Hausnetz (24) eingerichtet ist, und das Hausnetz (24) über ein elektrisches Versorgungsnetz (30) mit einer Zentraleinheit (40) umfassend die zentrale Steuerung (45) verbunden ist, und wobei das Verfahren die folgenden von der zentralen Steuerung (45) ausgeführten Verfahrensschritte umfasst:
Empfangen (110), von der dezentralen Steuerung (25) über das Kommunikationsnetz (51), von Konfigurationsinformation und
Konfigurieren (120), basierend auf der empfangenen Konfigurationsinformation, einer Kommunikationsverbindung zwischen der dezentralen Steuerung (25) und der zentralen Steuerung (45) über das Kommunikationsnetz (51).

2. Verfahren nach Anspruch 1, ferner umfassend, vor dem Empfangen (110) der Konfigurationsinformation,
Erfassen eines Anschlusses der dezentralen Steuerung (25) an das Kommunikationsnetz (51) und
Anfordern, von der dezentralen Steuerung (25), der Konfigurationsinformation.

3. Verfahren nach einem der vorhergehenden Ansprüche, wobei
die Konfigurationsinformation Information betreffend einen Hersteller, ein Modell und/oder benötigte Treiber der dezentralen Steuerung (25) und/oder eines Gateways der dezentralen Steuerung (25) umfasst.

4. Verfahren nach einem der vorhergehenden Ansprüche, ferner umfassend, nach dem Konfigurieren (120) der Kommunikationsverbindung zwischen der dezentralen Steuerung (25) und der zentralen Steuerung (45),
Empfangen (130), von der dezentralen Steuerung (25), von Information betreffend den elektrischen Energieerzeuger (10), den elektrischen Energieverbraucher (11) und/oder den elektrischen Energiespeicher (12).

5. Verfahren nach Anspruch 4, wobei
die Information betreffend den elektrischen Energieerzeuger (10), den elektrischen Energieverbraucher (11) und/oder den elektrischen Energiespeicher (12) elektrische Leistungen, insbesondere maximale elektrische Leistungen, die der elektrische Energieerzeuger (10), der elektrische Energieverbraucher (11) und/oder der elektrische Energiespeicher (12) in das elektrische Versorgungsnetz (30) einspeist bzw. von dem elektrischen Versorgungsnetz (30) bezieht, umfasst.

6. Verfahren nach Anspruch 4 oder 5, wobei
die Information betreffend den elektrischen Energieerzeuger (10), den elektrischen Energieverbraucher (11) und/oder den elektrischen Energiespeicher (12) Information betreffend einen Hersteller, ein Modell und/oder einen Installateur des elektrischen Energieerzeugers (10), des elektrischen Energieverbrauchers (11) und/oder des elektrischen Energiespeichers (12) umfasst.

7. Verfahren nach einem der Ansprüche 4 bis 6, ferner umfassend
Steuern (140), basierend auf der Information betreffend den elektrischen Energieerzeuger (10), den elektrischen Energieverbraucher (11) und/oder den elektrischen Energiespeicher (12), des elektrischen Energieerzeugers (10), des elektrischen Energieverbrauchers (11) und/oder des elektrischen Energiespeichers (12).

8. Zentrale Steuerung (45), eingerichtet zum Ausführen des Verfahrens nach einem der vorhergehenden Ansprüche.

9. Verfahren (200) zum Verbinden, insbesondere zum erstmaligen automatischen Verbinden, einer dezentralen Steuerung (25) über ein Kommunikationsnetz (51) mit einer zentralen Steuerung (45), wobei die dezentrale Steuerung (25) zum Steuern von elektrischen Energieerzeugern (10), elektrischen Energieverbrauchern (11) und/oder elektrischen Energiespeichern (12) in einem Hausnetz (24) eingerichtet ist, und das Hausnetz (24) über ein elektrisches Versorgungsnetz (30) mit einer Zentraleinheit (40) umfassend die zentrale Steuerung (45) verbunden ist, und wobei das Verfahren den folgenden von der dezentralen Steuerung (25) ausgeführten Verfahrensschritt umfasst:
Senden (210), nach einem erstmaligen Anschluss der dezentralen Steuerung (25) an das Kommunikationsnetz (51), von Konfigurationsinformation über das Kommunikationsnetz (51) an die zentrale Steuerung (45).

10. Verfahren nach Anspruch 9, ferner umfassend, vor dem Senden der Konfigurationsinformation,
Empfangen, von der zentralen Steuerung (45), einer Anforderung der Konfigurationsinformation.

11. Verfahren nach einem der Ansprüche 9 oder 10, wobei
die Konfigurationsinformation Information betreffend einen Hersteller, ein Modell und/oder benötigte Treiber der dezentralen Steuerung (25) und/oder eines Gateways der dezentralen Steuerung (25) umfasst.

12. Verfahren nach einem der Ansprüche 9 bis 11, ferner umfassend, nach einer Konfiguration der Kommunikationsverbindung zwischen der dezentralen Steuerung (25) und der zentralen Steuerung (45),
Senden (220), an die zentrale Steuerung (45), von Information betreffend den elektrischen Energieerzeuger (10), den elektrischen Energieverbraucher (11) und/oder den elektrischen Energiespeicher (12).

13. Verfahren nach einem der Ansprüche 9 bis 12, ferner umfassend
Empfangen (230), von der zentralen Steuerung (45), von Steuerungsbefehlen für den elektrischen Energieerzeuger (10), den elektrischen Energieverbraucher (11) und/oder den elektrischen Energiespeicher (12), und
Steuern (240), basierend auf den Steuerungsbefehlen, des elektrischen Energieerzeugers (10), des elektrischen Energieverbrauchers (11) und/oder des elektrischen Energiespeichers (12).

14. Dezentrale Steuerung (25), eingerichtet zum Ausführen des Verfahrens nach einem der Ansprüche 9 bis 13.

15. Steuerungssystem, umfassend
die zentrale Steuerung (45) nach Anspruch 8 und
die dezentrale Steuerung (25) nach Anspruch 14.
